# EUROPEAN PATENT APPLICATION

(11) **EP 4 693 231 A1**
(43) Date of publication of application: **11.02.2026**
(21) Application number: 23930640.0
(22) Date of filing: 31.03.2023
(51) Int. Cl.: G06V 40/70, G06V 40/16

(54) **DETERMINATION METHOD, DETERMINATION PROGRAM, AND INFORMATION PROCESSING DEVICE**

(71) Applicant: FUJITSU LIMITED, Kawasaki-shi, Kanagawa 211-8588 (JP)
(72) Inventor: HANADA, Yuichi, Kawasaki-shi, Kanagawa 211-8588 (JP); ABE, Narishige, Kawasaki-shi, Kanagawa 211-8588 (JP); MATSUYAMA, Yoshihiro, Kawasaki-shi, Kanagawa 211-8588 (JP)
(74) Representative: Hoffmann Eitle
(86) International application number: PCT/JP2023/013542
(87) International publication number: WO 2024/202005

(57) **Abstract**

In a determination method, a computer executes a process including, extracting first-type feature information of a first person by using a first image captured by a first camera, when second-type feature information is extracted from the first person before or after the first image is captured, identifying a person corresponding to the first person by using the second-type feature information of each of a plurality of people stored in a memory, and when the first-type feature information of a second person is extracted using a second image captured by the first camera or a second camera, identifying a person corresponding to the second person by using the first-type feature information of the first person identified.

## Description

### TECHNICAL FIELD

The present invention relates to a determination method, a determination program and an information processing device.

### BACKGROUND ART

A technology has been disclosed that extracts a facial feature and a first whole-body feature from a first image, compares the facial feature with a list, extracts a second whole-body feature from a second image, and compares the first whole-body feature with the second whole-body feature to identify a tracking target (see, for example, Patent Document 1).

### CITATION LIST

### PATENT DOCUMENT

PATENT DOCUMENT 1: International Publication No. 2020/115910

### SUMMARY OF THE INVENTION

### TECHNICAL PROBLEM

However, it is sometimes impossible to extract a feature with high accuracy. In such cases, the accuracy of person identification decreases.

In one aspect, the present invention aims to provide a determination method, a determination program and an information processing device that can improve the accuracy of person identification.

### SOLUTION TO PROBLEM

In one aspect, in a determination method, a computer executes a process including: extracting first-type feature information of a first person by using a first image captured by a first camera; when second-type feature information is extracted from the first person before or after the first image is captured, identifying a person corresponding to the first person by using the second-type feature information of each of a plurality of people stored in a memory; and when the first-type feature information of a second person is extracted using a second image captured by the first camera or a second camera, identifying a person corresponding to the second person by using the first-type feature information of the first person identified.

### ADVANTAGEOUS EFFECTS OF INVENTION

The accuracy of person identification can be improved.

### BRIEF DESCRIPTION OF THE DRAWINGS

[FIG. 1] Provided is a diagram illustrating an overview of Embodiment 1.
[FIG. 2] (a) is a block diagram illustrating an overall configuration of a biometric authentication system 0 according to Embodiment 1, and (b) is a functional block diagram illustrating each function of a server.
[FIG. 3] Provided is a flowchart illustrating a tracking process.
[FIG. 4] (a) is a diagram illustrating a table stored in a camera information memory, and (b) is a diagram illustrating a table.
[FIG. 5] Provided is a diagram illustrating a table stored in an overall information memory.
[FIG. 6] Provided is a flowchart illustrating details of step S5.
[FIG. 7] Provided is a diagram illustrating updating of a table during a tracking authentication process.
[FIG. 8] Provided is a diagram illustrating a temporary storage table stored in a temporary memory.
[FIG. 9] Provided is a flowchart illustrating an authentication process.
[FIG. 10] Provided is a flowchart illustrating a linking process.
[FIG. 11] Provided is a diagram illustrating updating of a table stored in an overall information memory.
[FIG. 12] (a) to (e) are diagrams illustrating postures of a person when approaching an authentication device and performing authentication.
[FIG. 13] Provided is a flowchart of another example of a tracking authentication processing.
[FIG. 14] Provided is a flowchart illustrating another linking process.
[FIG. 15] Provided is a block diagram illustrating a hardware configuration of a server.

### DESCRIPTION OF EMBODIMENTS

Biometric authentication is a technology that uses biometric features such as fingerprints, facial features, and veins to verify a user's identity. When a user's identity is required, biometric feature data acquired by a biometric sensor is compared with pre-registered biometric feature data to determine whether the similarity exceeds a threshold for identity verification. Biometric authentication is used in a variety of fields, including bank ATMs and access control. In recent years, it has also begun to be used for cashless payments at supermarkets and convenience stores.

These biometric authentication methods are "point" authentication, performed at specific authentication spots, such as in front of an authentication device. However, with "point" authentication, the authentication state is interrupted when the user leaves the authentication spot. Therefore, when a user accesses a service or at a location where authentication is required multiple times, authentication must be repeated each time. Therefore, there is a need for continuous authentication technology that eliminates the need for repeated authentication, allowing users to continue using services with a single authentication.

Here, we will provide an overview of continuous authentication technology. Continuous authentication involves three main types of authentication:

First, there is authentication at check-in. At a gate or other location, the user performs highly accurate authentication using palm vein authentication or other methods. After successful authentication, a camera captures the user's appearance, and the user's ID is linked to the feature information acquired by the camera.

Next, there is line authentication. Using the feature information acquired at the time of successful authentication and feature information acquired continuously over time using one or more cameras, the person captured on camera is authenticated as the successfully authenticated user, maintaining an authentication state.

Next, there is re-authentication. For example, if the user enters a blind spot in the camera due to an obstacle or a pillar, re-authentication is performed if the authentication state is interrupted.

Continuous authentication can be achieved by performing these types of authentication. However, when checking in, the user must perform an authentication action for check-in. In this case, the user assumes a posture specific to the authentication action, which differs from normal behavior. For example, in palm vein authentication, the user may be in a position where their hand is raised to hold their hand over the authentication device, or in a position where their waist is bent, which is different from a normal position such as when walking. Even when entering a password, the user is in a position to enter the password into the input device, which is different from a normal position. Even in face authentication, the user's face is brought close to the camera, so depending on the physique of the person being authenticated, they may be in a position that is different from a normal position, such as stretching or bending over. If the appearance of a person in a position where they are performing an action different from a normal action is stored as feature information in this way, there is a risk that the accuracy of person identification on the line thereafter will decrease.

The following embodiment describes a determination method, a determination program, and an information processing device that can improve the accuracy of person identification.

### Embodiment 1

First, we will describe first-type feature information and second-type feature information. The first-type feature information is feature information used to maintain the authentication state. Examples of the first-type feature information that can be used include appearance features such as clothing color, physique, facial features, and behavioral features. The second-type feature information is a feature used to identify a person through highly accurate authentication. Examples of the second-type feature information that can be used include biometric features such as palm veins, facial features, irises, fingerprints, palm prints, and finger veins. Alternatively, attribute information such as an ID card or password can be used as second-type feature information.

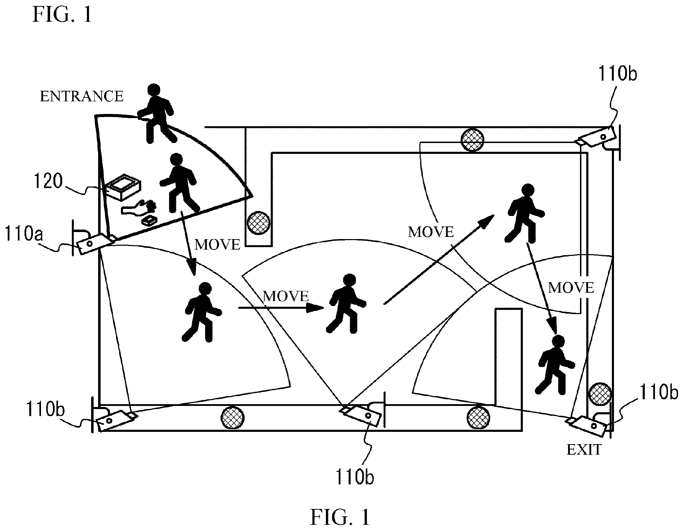

Next, we will describe an overview of Embodiment 1. FIG. 1 is a diagram illustrating an overview of Embodiment 1. As illustrated in FIG. 1, a linking camera 110a captures an image of the entrance area, including an authentication device 120. When a user enters the room through the entrance, the user is detected from the image captured by the linking camera 110a, the first-type feature information is extracted, and a temporary ID is issued and linked.

The user then inputs the second feature information into the authentication device 120. If authentication by the authentication device 120 is successful, the user's attribute information, such as their ID, is linked to the first-type feature information captured by the linking camera 110a.

As the user then moves, an environmental camera 110b, which is capturing images of the environment, captures the user's first-type feature information. If the similarity between the first-type feature information captured by the linking camera 110a and the first-type feature information captured by the environmental camera 110b is equal to or more than a threshold, the user is identified as the original user. Thereafter, as the user moves, authentication using the first-type feature information is performed using other environmental cameras 110b.

With this method, the second-type feature information is extracted from the user after being photographed by the linking camera 110a. Therefore, when the user is photographed by the linking camera 110a, the user is in a normal posture, such as when moving. This allows for highly accurate authentication using the first-type feature information after the user's ID has been identified. Note that in the example of FIG. 1, the first-type feature information is acquired before the authentication operation is performed by the authentication device. However, the first-type feature information may also be acquired after the authentication operation is performed by the authentication device.

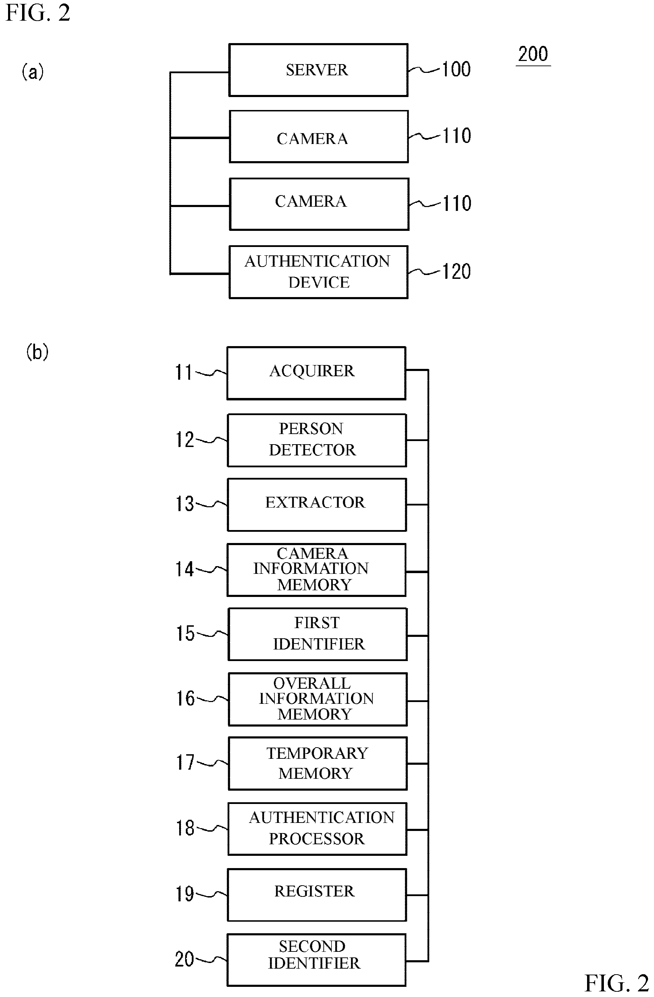

FIG. 2(a) is a block diagram illustrating the overall configuration of a biometric authentication system 200 according to Embodiment 1. As illustrated in FIG. 2(a), the biometric authentication system 200 includes a server 100 that functions as an information processing device, one or more cameras 110, and the authentication device 120. A camera 110 is a device for acquiring the first-type feature information. The authentication device 120 is a device for performing authentication using the second-type feature information.

FIG. 2(b) is a functional block diagram of each function of the server 100. As illustrated in FIG. 2(b), the server 100 functions as an acquirer 11, a person detector 12, an extractor 13, a camera information memory 14, a first identifier 15, an overall information memory 16, a temporary memory 17, an authentication processor 18, a register 19, a second identifier 20, and the like.

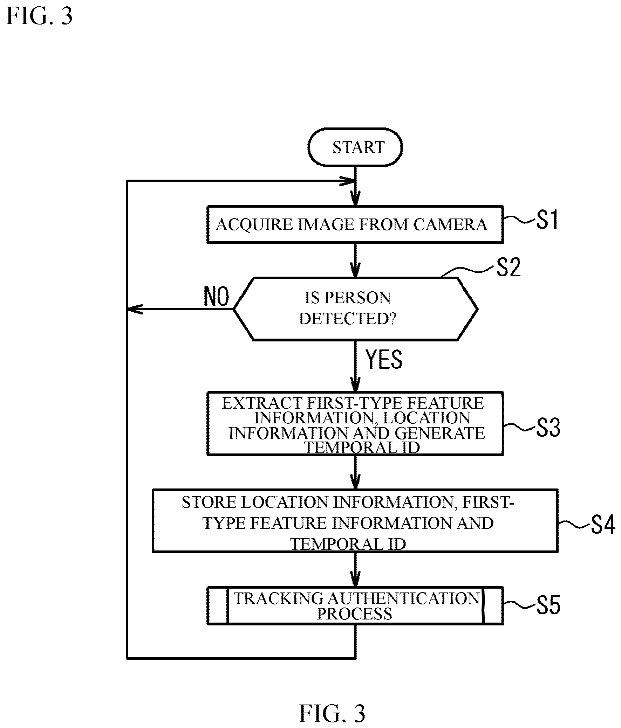

FIG. 3 is a flowchart of the tracking process. The tracking process in FIG. 3 is executed at a predetermined interval. The tracking process in FIG. 3 is also executed independently and in parallel for each of the cameras 110.

As illustrated in FIG. 3, the acquirer 11 acquires an image (first image) from the camera 110 (step S1).

Next, the person detector 12 determines whether a person has been detected from each image acquired by the acquirer 11 (step S2). If the determination in step S2 is "No," processing is executed again from step S1 after a predetermined time.

If the determination in step S2 is "Yes," the extractor 13 extracts the first-type feature information and location information of the person detected in step S2 from the images acquired in step S1, and generates and links a temporary ID (step S3). The location information may be information about the location of a specific part of the person in the image. For example, the position range of the person's a pair of shoes, etc., is used as detected location information. Because the installation position and angle of view of the camera 110 are predetermined, the location information can be obtained from the image.

Next, the camera information memory 14 stores, for the camera 110, the location information when the person was detected in step S2, the first-type feature information extracted in step S3, and the temporary ID generated in step S3 (step S4).

Then, the first identifier 15 performs tracking and authentication processing (step S5).

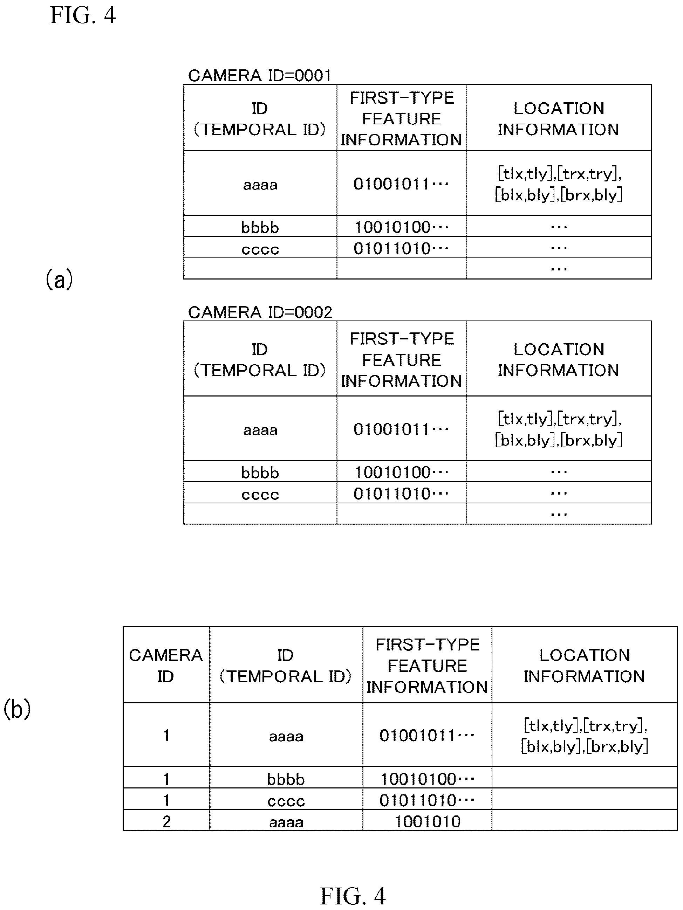

FIG. 4(a) is a diagram illustrating an example of a table stored in the camera information memory 14. As illustrated in FIG. 4(a), the camera information memory 14 stores the temporary ID, the location information, and the first-type feature information associated with each camera. In FIG. 4(a), the temporary ID, the location information, and the first-type feature information are stored associated with each other for the cameras with camera IDs 0001 and 0002. For example, with camera ID=0001, three people with temporary ID=aaaa, temporary ID=bbbb, and temporary ID=cccc are detected at a given time.

Alternatively, the camera information memory 14 may store the temporary ID, the location information, and the first-type feature information in a single table, linking them together. FIG. 4(b) is a diagram illustrating an example of such a table. As illustrated in FIG. 4(b), the camera ID may be added, and the temporary ID, the location information, and first-type feature information may be stored in a linked manner.

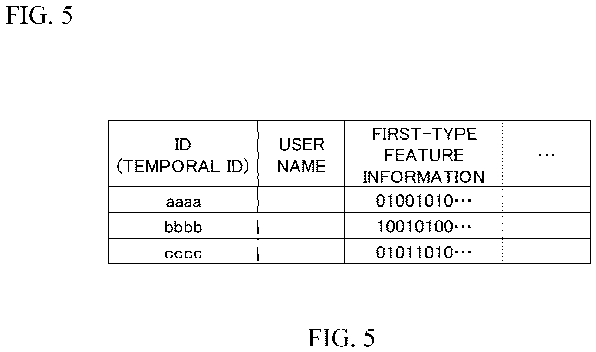

FIG. 5 is a diagram illustrating an example of a table stored in the overall information memory 16. The overall information memory 16 stores the temporary IDs being tracked and their first-type feature information. In the table stored in the overall information memory 16, the camera IDs are not linked. As illustrated in FIG. 5, the overall information memory 16 stores the temporary IDs in a linked manner and the first-type feature information. For example, at a given time, three people with temporary IDs = aaaa, bbbb, and cccc are being tracked.

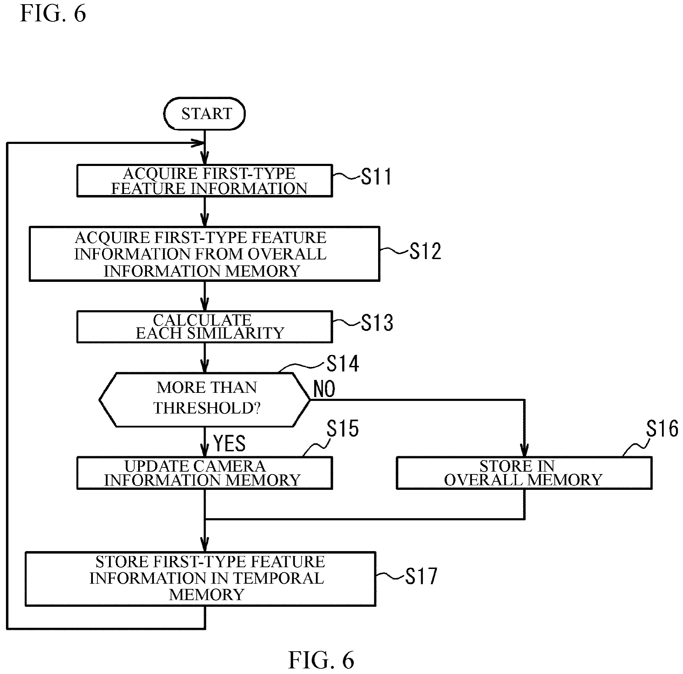

FIG. 6 is a flowchart illustrating the details of step S5. The process in FIG. 6 is executed sequentially for each person detected in step S2. First, the first identifier 15 acquires the first-type feature information for the person detected in step S2 from the camera information memory 14 (step S11).

Next, the first identifier 15 acquires the first-type feature information for all temporary IDs stored in the overall information memory 16 from the overall information memory 16 (step S12).

Next, the first identifier 15 calculates the similarity between the first-type feature information acquired in step S11 and the first-type feature information acquired in step S12 (step S13). By executing step S13, an index can be calculated for determining whether the person detected in step S2 resembles the person with the temporary ID stored in the overall information memory 16.

Next, the first identifier 15 determines whether each similarity calculated in step S13 exceeds a threshold (step S14). By executing step S14, it is possible to determine whether the person detected in step S2 is the same person as the person whose temporary ID is stored in the overall information memory 16.

If the determination in step S14 is "Yes," the first identifier 15 updates the contents of the camera information memory 14 (step S15). Specifically, the temporary ID stored in the camera information memory 14 is updated to the temporary ID of the target whose similarity exceeded the threshold in step S14. By executing step S15, the authentication state of the person detected by the camera 110 can be maintained.

If the determination in step S14 is "No," the first identifier 15 stores information about the temporary ID whose similarity does not exceed the threshold in the overall information memory 16 (step S16). By executing step S16, the newly detected person can be stored in the overall information memory 16.

After executing step S15 or step S16, the temporary memory 17 stores the first-type feature information of the target temporary ID in the temporary storage table (step S17). Then, execution is resumed from step S11. In this case, the next person among the people detected in step S2 is targeted.

Note that in step S12, the temporary IDs stored in the overall information memory 16 that were updated in step S15 may be excluded from the acquired IDs. This allows unnecessary authentication processing to be omitted.

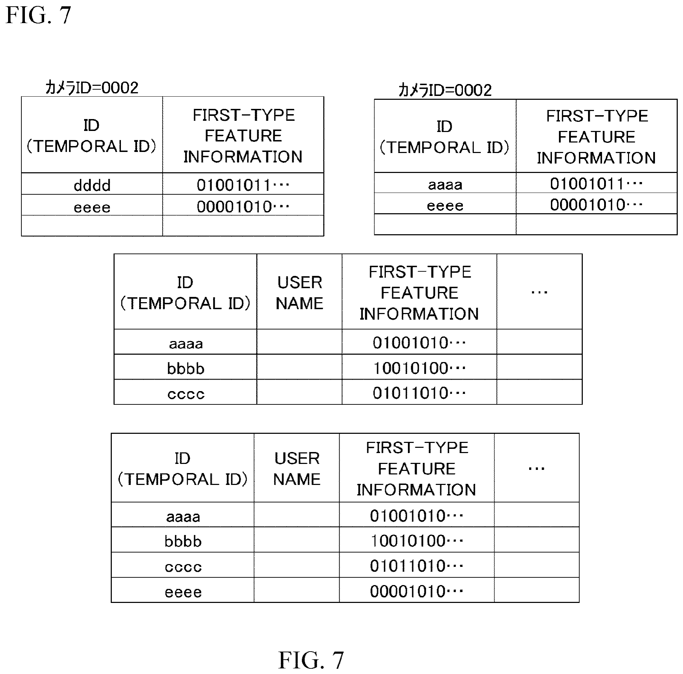

FIG. 7 is a diagram illustrating table updates during the tracking and authentication process described above. The upper left diagram in FIG. 7 is a table for camera ID = 0002 stored in the camera information memory 14 at a specified time. The middle diagram in FIG. 7 is a table stored in the overall information memory 16 at that specified time. For example, of the temporary IDs stored in the table for camera ID = 0002, the similarity between the first-type feature information for temporary ID = dddd and each first-type feature information in the table stored in the overall information memory 16 is calculated. In this example, the similarity between the first-type feature information for temporary ID = dddd and the first-type feature information for temporary ID = aaaa is greater than or equal to the threshold. Therefore, as illustrated in the upper right diagram in FIG. 7, temporary ID = dddd is updated to temporary ID = aaaa in the table for camera ID = 0002. Furthermore, because there is no first type feature information whose similarity with the first type feature information of temporary ID=eeee is equal to or greater than the threshold, the information of temporary ID=eeee is not updated in the table of camera ID=0002, and the information of temporary ID=eeee is added to the table of the overall information memory 16.

Therefore, in the example of FIG. 7, the person with temporary ID=aaaa remains authenticated. The person with temporary ID=eeee is newly added to the tracking targets.

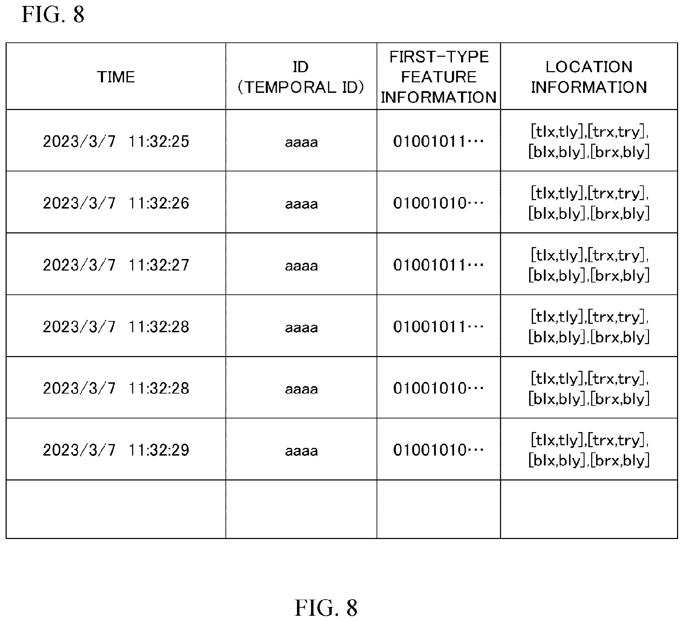

FIG. 8 is a diagram illustrating an example of a temporary storage table stored in the temporary memory 17. The example of FIG. 8 illustrates the temporarily stored first type feature information for temporary ID=aaaa. As illustrated in FIG. 8, the first type feature information and the location information are stored in chronological order at a predetermined time period. Note that the first type feature information at each time point is feature information extracted at each time point, and therefore may change slightly. For example, because the first-type feature information is acquired while a person with temporary ID = aaaa is moving, the first-type feature information may change depending on the person's posture while moving. The temporary storage table stored in the temporary memory 17 is designed to store only temporary data, and past data is deleted after a predetermined period of time has passed.

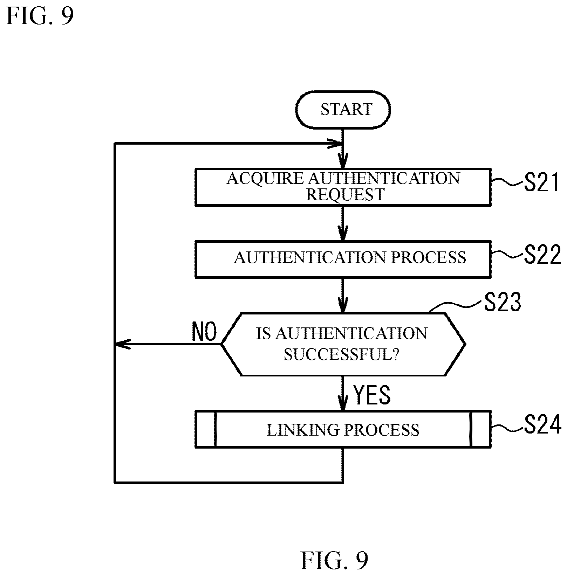

Next, we will explain the authentication process and the linking process for identifying the person associated with each temporary ID using the second-type feature information. FIG. 9 is a flowchart illustrating the authentication process. As illustrated in FIG. 9, first, the authentication processor 18 acquires an authentication request (step S21). For example, when a user holds their hand over the authentication device 120, turns on an authentication request button displayed on the authentication device 120, or enters a password, an authentication request is sent from the authentication device 120 to the authentication processor 18.

Next, the authentication processor 18 performs the authentication process (step S22). Specifically, the authentication processor 18 calculates the similarity between the registration data stored in the register 19 and the matching data acquired by the authentication device 120. Note that in step S22, registration data that has already been successfully authenticated may be excluded from the similarity calculation. In this way, unnecessary authentication processing can be omitted.

Next, the authentication processor 18 determines whether the authentication is successful (step S23). Specifically, it determines whether the similarity calculated in step S22 exceeds a threshold. If the similarity exceeds the threshold, it is determined that the authentication is successful.

If the determination in step S23 is "No," processing resumes from step S21. If the determination in step S23 is "Yes," the second identifier 20 performs the linking process (step S24).

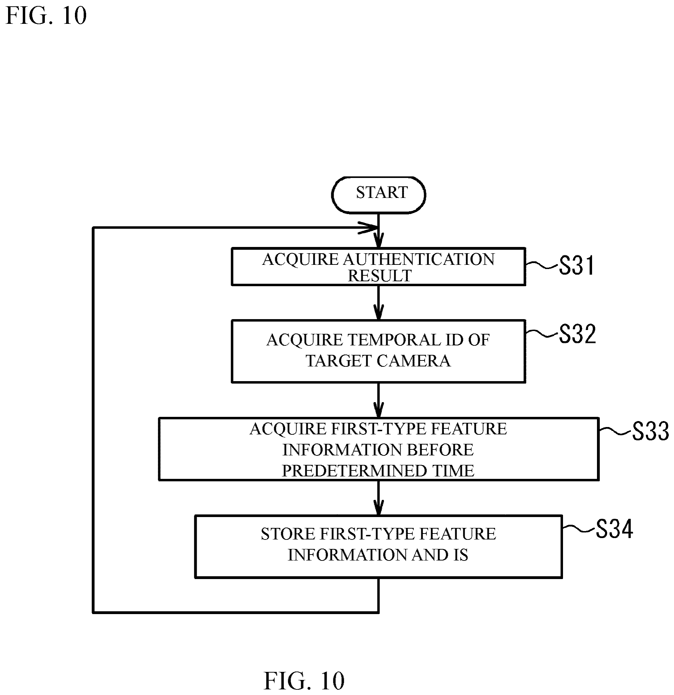

FIG. 10 is a flowchart illustrating the linking process. As illustrated in FIG. 10, the second identifier 20 obtains the authentication result from the authentication processor 18 (step S31).

Next, the second identifier 20 obtains the temporary ID of the target camera 110 from the camera information memory 14 (step S32).

Next, the second identifier 20 obtains, from the temporary memory 17, the first-type feature information extracted from the second image of the target temporary ID taken a predetermined time before (several seconds before) (step S33).

Next, the second identifier 20 stores the first-type feature information and the ID acquired in step S33 in a table stored in the overall information memory 16 (step S34). Then, processing is resumed from step S31.

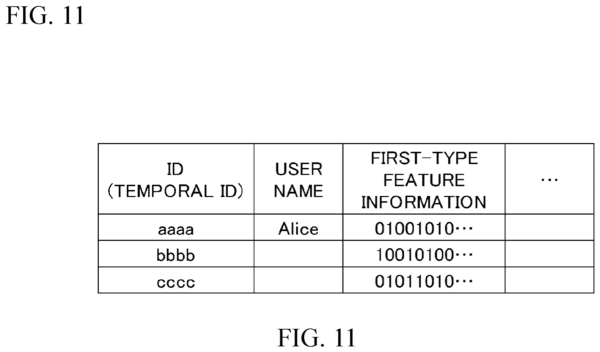

FIG. 11 is a diagram illustrating an example of updating the table stored in the overall information memory 16. For example, if temporary ID=aaaa is identified as username Alice, the username Alice is linked to temporary ID=aaaa as the ID. The first-type feature information is also updated to the first-type feature information acquired in step S33.

According to this embodiment, the first-type feature information acquired a predetermined time before the time of successful authentication using the authentication device 120 is used as the first-type feature information of the person who has been successfully authenticated using the authentication device 120. As a result, instead of using the first-type feature information in a special posture for the authentication operation of the authentication device 120, the first-type feature information in a posture for normal or near-normal movement is used. As a result, the first-type feature information can be acquired with high accuracy, improving the accuracy of person identification.

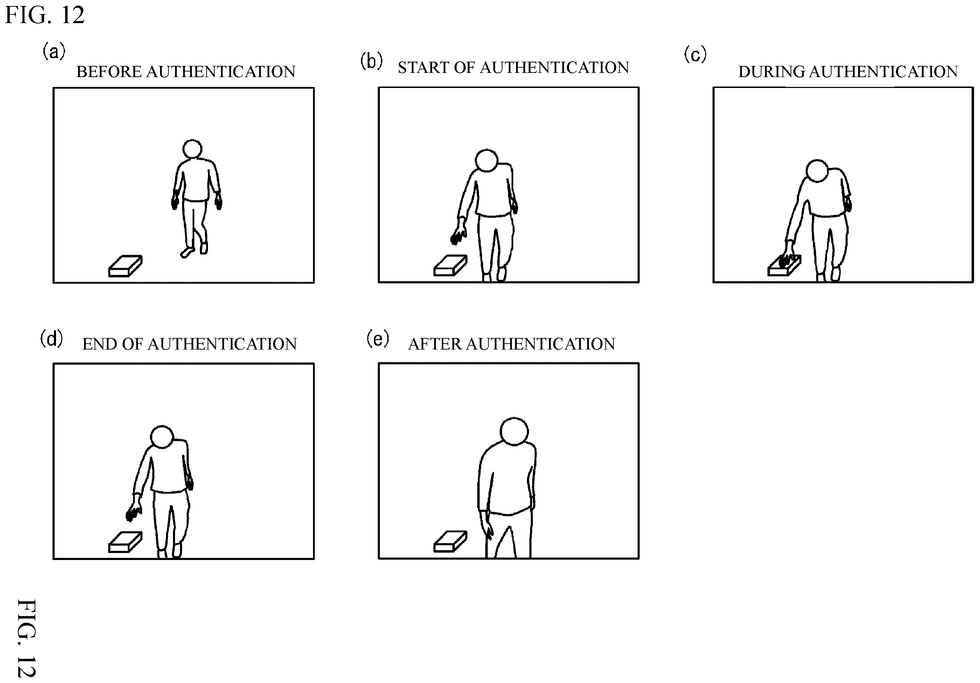

FIG. 12(a) to FIG. 12(e) are diagrams illustrating examples of postures when a person approaches the authentication device 120 and performs authentication. In FIG. 12(a), the person is farther away than the authentication device 120. Therefore, the person has not yet assumed a posture for performing authentication, and is in a normal walking posture. Next, in FIG. 12(b), the person has assumed a posture for performing authentication because authentication by the authentication device 120 has begun. Next, in FIG. 12(c), the person is assuming a posture for performing authentication because authentication by the authentication device 120 is currently in progress. Next, in FIG. 12(d), authentication by the authentication device 120 has ended, but the person is still assuming a posture for performing authentication. Next, in FIG. 12(e), the person is away from the authentication device 120 and is therefore assuming a normal walking posture.

In consideration of these movements, for a person with average movement speed, it takes approximately four seconds from the start to the end of authentication. Therefore, it is preferable to use, for example, the first-type feature information acquired five to six seconds before the time of successful authentication using the authentication device 120 as the first-type feature information of a person who has been successfully authenticated using the authentication device 120.

(Modified embodiment 1) In FIG. 12(a) through FIG. 12(e), we have described the authentication operation for a person with average movement speed. However, movement speed varies from person to person. For example, some people move quickly to the authentication device 120, while others move slowly. Therefore, the time range of data temporarily stored in the temporary memory 17 may be determined based on the distance between the authentication device 120 and the person.

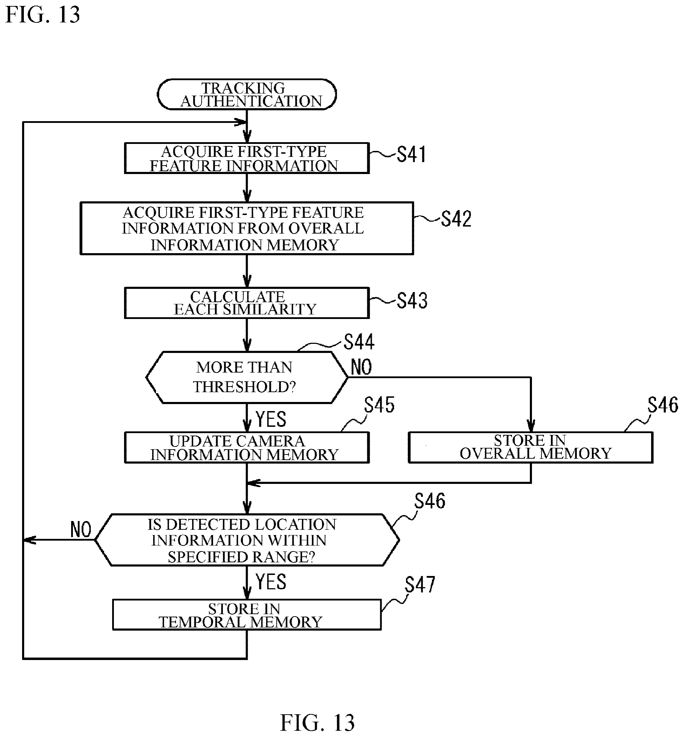

FIG. 13 is a flowchart of another example of the tracking authentication process. The process in FIG. 13 is executed sequentially for each person detected in step S2. First, the first identifier 15 acquires the first-type feature information of the person detected in step S2 from the camera information memory 14 (step S41).

Next, the first identifier 15 acquires the first-type feature information for all temporary IDs stored in the overall information memory 16 from the overall information memory 16 (step S42).

Next, the first identifier 15 calculates the similarity between the first-type feature information acquired in step S41 and the first-type feature information acquired in step S42 (step S43). By executing step S43, it is possible to calculate an index for determining whether the person detected in step S2 resembles the person with the temporary ID stored in the overall information memory 16.

Next, the first identifier 15 determines whether each similarity calculated in step S43 exceeds a threshold (step S44). By executing step S44, it is possible to determine whether the person detected in step S2 is the same person as the person with the temporary ID stored in the overall information memory 16.

If step S43 returns "Yes," the first identifier 15 updates the contents of the camera information memory 14 (step S45). Specifically, the temporary ID stored in the camera information memory 14 is updated to the temporary ID of the target whose similarity exceeded the threshold in step S43. By executing step S45, the authentication state of the person detected by the camera 110 can be continued.

If step S44 returns "No," the first identifier 15 stores information about the temporary ID whose similarity did not exceed the threshold in the overall information memory 16 (step S46). By executing step S46, the newly detected person can be stored in the overall information memory 16.

After executing step S45 or step S46, the first identifier 15 determines whether the detected position information is within the specified range (step S47). By executing step S47, it is possible to determine whether the person is performing authentication or has not yet performed authentication. A specific range within which the detected position information falls if the person has not yet performed authentication is determined. If the detected position information falls outside this specific range, it is determined that the person has approached the authentication device 120, and it is possible to determine that the person has begun authentication.

If step S47 returns "Yes," it can be determined that the person has not yet performed authentication. As a result, the temporary memory 17 stores the feature quantities of the target temporary ID in the temporary memory (step S47). Then, processing is resumed from step S11. In this case, the next person among the people detected in step S2 is targeted.

If step S47 returns "No," processing is not performed from step S47, and processing is resumed from step S42.

(Modified embodiment 2) In FIG. 12(a) through FIG. 12(e), the authentication process for a person with average movement speed has been described. A person with average movement speed will assume a normal walking posture one to two seconds after successful authentication. Therefore, the use of first-type feature information obtained a predetermined time after successful authentication will be described.

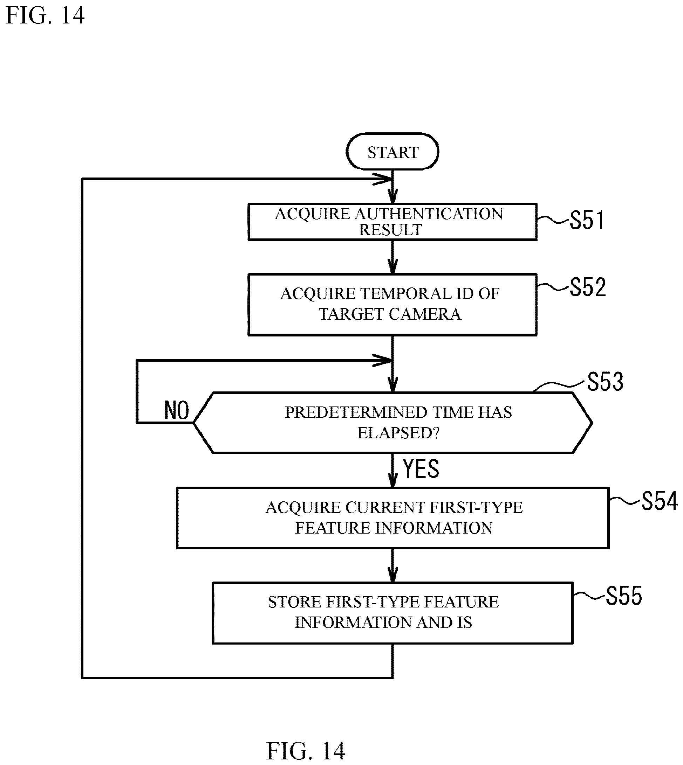

FIG. 14 is a flowchart illustrating another linking process. As illustrated in FIG. 14, the second identifier 20 obtains the authentication result from the authentication processor 18 (step S51).

Next, the second identifier 20 obtains the temporary ID of the target camera 110 from the camera information memory 14 (step S52).

Next, the second identifier 20 determines whether a specified time (several seconds, for example, one to two seconds) has elapsed since step S52 was performed (step S53). If the determination in step S53 is "No," step S53 is executed again.

If the determination in step S53 is "Yes," the first-type feature information extracted from the current image (second image) of the target temporary ID is obtained from the camera information memory 14 (step S54).

Next, the second identifier 20 stores the first-type feature information and the ID acquired in step S54 in a table stored in the overall information memory 16 (step S55). Then, processing is executed again from step S51.

According to this embodiment, the first-type feature information acquired a predetermined time after the time of successful authentication using the authentication device 120 is used as the first-type feature information of the person who has been successfully authenticated using the authentication device 120. As a result, the first-type feature information acquired in a posture corresponding to normal or near-normal movements is used, rather than the first-type feature information acquired in a special posture for the authentication operation of the authentication device 120. As a result, the first-type feature information can be acquired with high accuracy.

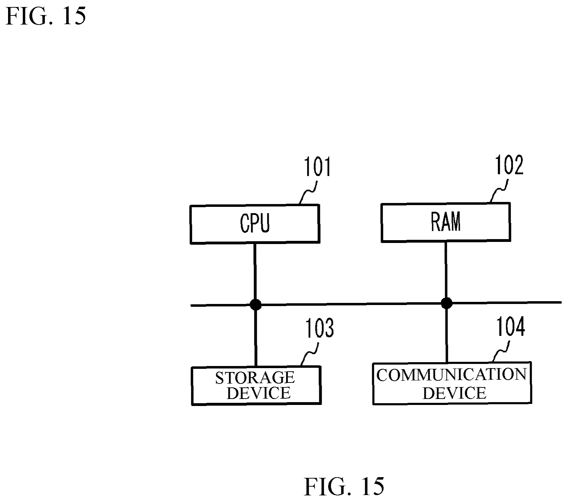

FIG. 15 is a block diagram illustrating the hardware configuration of the server 100. As illustrated in FIG. 15, the server 100 includes a CPU 101, a RAM 102, a storage device 103, a communication device 104, and so on. These devices are connected via a bus or the like. The CPU (Central Processing Unit) 101 is a central processing unit. The RAM (Random Access Memory) 102 is a volatile memory that temporarily stores programs executed by the CPU 101 and data processed by the CPU 101. The storage device 103 is a non-volatile storage device. For example, the storage device 103 may be a ROM (Read Only Memory), a solid state drive (SSD) such as a flash memory, or a hard disk driven by a hard disk drive. The functions of each part of the server 100 are realized by the CPU 101 executing the authentication program stored in the storage device 103. Note that the functions of each part of the server 100 may be configured using dedicated circuits or the like. The communication device 104 is an interface to a telecommunications line 300.

In each of the above examples, the extractor 13 is an example of an extractor that extracts first-type feature information of a first person using a first image captured by a first camera. When the second identifier 20 extracts second-type feature information from the first person before or after the first image is captured, this is an example of a second identifier that identifies a person corresponding to the first person using the second-type feature information of each of multiple people stored in a memory. When the first identifier 15 extracts first-type feature information of a second person using a second image captured by the first camera or another second camera, this is an example of a first identifier that identifies a person corresponding to the second person using the first-type feature information of the identified first person.

The above-described embodiment is a preferred example of the present invention. However, the present disclosure is not limited to this, and various modifications can be made without departing from the scope of the present invention.

### Description of Symbols

- 11: Acquirer

- 12: Person detector
- 13: Extractor
- 14: Camera information memory
- 15: First identifier
- 16: Overall information memory
- 17: Temporary memory
- 18: Authentication processor
- 19: Register
- 20: Second identifier
- 100: Server
- 110: Camera
- 120: Authentication device
- 200: Biometric authentication system

## Claims

1. A determination method **characterized in that** a computer executes a process including:
extracting first-type feature information of a first person by using a first image captured by a first camera;
when second-type feature information is extracted from the first person before or after the first image is captured, identifying a person corresponding to the first person by using the second-type feature information of each of a plurality of people stored in a memory; and
when the first-type feature information of a second person is extracted using a second image captured by the first camera or a second camera, identifying a person corresponding to the second person by using the first-type feature information of the first person identified.

2. The determination method as claimed in claim 1, **characterized in that** before or after the first image is captured means a specified time before or after a time when the first image is captured.

3. The determination method as claimed in claim 1, **characterized in that** before or after the first image is captured means that the first person is detected to be within a specific position range of an image angle of the first camera.

4. The determination method as claimed in claim 1, **characterized in that** when identifying a person corresponding to the first person using the second-type feature information of each of the plurality of people stored in the memory, excluding a person from the plurality of people who has already been identified using the second-type feature information.

5. The determination method as claimed in claim 1, **characterized in that** when identifying a person corresponding to the second person using the first-type feature information of the first person identified, determination is made from a plurality of the first person other than the first person identified as the person corresponding to the second person among the plurality of first person.

6. The determination method as claimed in claim 1, **characterized in that** when a person corresponding to the second person is identified, the first-type feature information extracted using the second image is stored in the memory as identification information of the second person.

7. A determination program **characterized by** causing a computer to execute a process including:
extracting first-type feature information of a first person by using a first image captured by a first camera;
when second-type feature information is extracted from the first person before or after the first image is captured, identifying a person corresponding to the first person by using the second-type feature information of each of a plurality of people stored in a memory; and
when the first-type feature information of a second person is extracted using a second image captured by the first camera or a second camera, identifying a person corresponding to the second person by using the first-type feature information of the first person identified.

8. The determination program as claimed in claim 7, **characterized in that** before or after the first image is captured means a specified time before or after a time when the first image is captured.

9. The determination program as claimed in claim 7, **characterized in that** before or after the first image is captured means that the first person is detected to be within a specific position range of an image angle of the first camera.

10. The determination program as claimed in claim 7, **characterized in that** when identifying a person corresponding to the first person using the second-type feature information of each of the plurality of people stored in the memory, excluding a person from the plurality of people who has already been identified using the second-type feature information.

11. The determination program as claimed in claim 7, **characterized in that** when identifying a person corresponding to the second person using the first-type feature information of the first person identified, determination is made from a plurality of the first person other than the first person identified as the person corresponding to the second person among the plurality of first person.

12. The determination program as claimed in claim 7, **characterized in that** when a person corresponding to the second person is identified, the first-type feature information extracted using the second image is stored in the memory as identification information of the second person.

13. An information processing device **characterized by** comprising:
an extractor configured to extract first-type feature information of a first person by using a first image captured by a first camera;
a second identifier configured to, when second-type feature information is extracted from the first person before or after the first image is captured, identify a person corresponding to the first person by using the second-type feature information of each of a plurality of people stored in a memory; and
a first identifier configured to, when the first-type feature information of a second person is extracted using a second image captured by the first camera or a second camera, identify a person corresponding to the second person by using the first-type feature information of the first person identified.

14. The information processing device claimed in claim 13, **characterized in that** before or after the first image is captured means a specified time before or after a time when the first image is captured.

15. The information processing device as claimed in claim 13, **characterized in that** before or after the first image is captured means that the first person is detected to be within a specific position range of an image angle of the first camera.

16. The information processing device as claimed in claim 13, **characterized in that** the second identifier, when identifying a person corresponding to the first person using the second-type feature information of each of the plurality of people stored in the memory, excludes a person from the plurality of people who has already been identified using the second-type feature information.

17. The information processing device as claimed in claim 13, **characterized in that** the first identifier, when identifying a person corresponding to the second person using the first-type feature information of the first person identified, makes determination from a plurality of the first person other than the first person identified as the person corresponding to the second person among the plurality of first person.

18. The information processing device claimed in claim 13, **characterized in that** when a person corresponding to the second person is identified, the memory stores the first-type feature information extracted using the second image as identification information of the second person.
